## Europäisches Patentamt

## European Patent Office

## Office européen des brevets

(19)

(11) Veröffentlichungsnummer: **0 207 435**
**A2**

(12) # EUROPÄISCHE PATENTANMELDUNG

(21) Anmeldenummer: **86108673.4**

(22) Anmeldetag: **25.06.86**

(51) Int. Cl.⁴: **G06F 15/62**

(30) Priorität: **03.07.85 DE 3523840**
**19.09.85 DE 3533491**

(43) Veröffentlichungstag der Anmeldung:
**07.01.87 Patentblatt 87/02**

(84) Benannte Vertragsstaaten:
**BE CH DE FR GB IT LI NL**

(71) Anmelder: **Siemens Aktiengesellschaft Berlin**
**und München**
**Wittelsbacherplatz 2**
**D-8000 München 2(DE)**

(72) Erfinder: **Kick, Horst**
**Am Schäferloch 26**
**D-7519 Walzbachtal 2(DE)**

(54) **Schaltungsanordnung zum Verarbeiten von Bilddaten.**

(57) Es sind mehrere Bildspeicher (SP1, SP2,, SP3, SP4) vorhanden, in denen jeweils die Bilddaten eines Bildes gespeichert sind. An deren Ausgänge ist eine logische Verknüpfungsschaltung (VL) angeschlossen, deren Ausgangssignale auf die Bildspeicher rückgeführt sind. Die Verknüpfungsschaltung (VL) besteht aus einem Multiplexer, dessen Steuereingänge (A, B, C) die zu verknüpfenden Signale und dessen Dateneingänge (E1, E2 ... E8) die Art der logischen Verknüpfung kennzeichnende Codesignale zugeführt sind.

Hauptanwendungsgebiet der Erfindung ist die Auswertung von Fernsehbildern.

FIG 1

EP 0 207 435 A2

## Schaltungsanordnung zum Verarbeiten von Bilddaten

Die Erfindung betrifft eine Schaltungsanordnung zum Verarbeiten von Bilddaten gemäß dem Oberbegriff des Anspruchs 1.

Es ist bekannt, z. B. aus der Zeitschrift "Der Elektroniker", Nr. 1, 1985, Seite 59 bis 67 zur Auswertung von Bildern, die mit einer Fernsehkamera aufgenommen sind, die Bildsignale in einen Speicher einzutragen, aus dem sie einem Rechner zur Auswertung, z. B. zur Mustererkennung, zugeführt werden. Oft braucht man nicht die Bildsignale mit mehreren Graustufen abzuspeichern, sondern es genügt, sie mittels einer Schwellwertstufe in Binärsignale umzusetzen. Man erhält dann ein sogenanntes Binärbild, dessen Bilddaten lediglich angeben, ob der zugehörige Bildpunkt hell oder dunkel ist.

Die unmittelbar aus dem Videosignal abgeleiteten Bilddaten enthalten eine Vielzahl von Informationen, die für die Auswertung nicht notwendig sind oder die Auswertung gar stören, den Auswerterechner aber stark belasten und damit die Verarbeitungsgeschwindigkeit verringern. Der vorliegenden Erfindung liegt die Aufgabe zugrunde, eine Schaltungsanordnung zu schaffen, mit der die binären Videosignale mit der Geschwindigkeit ihres Entstehens vorverarbeitet werden können.

Erfindungsgemäß wird diese Aufgabe mit den im kennzeichnenden Teil des Anspruchs 1 angegebenen Maßnahmen gelöst.

Es sind also mehrere Speicher vorhanden, in denen ein Binärbild abgespeichert wird, dessen Bildsignale mit denen, die aus aktuellen, von der Kamera gelieferten Datensignalen logisch verknüpft werden, oder mit Bildsignalen, die in einem weiteren Bildspeicher enthalten sind.

Die Verknüpfungsschaltung ist zweckmäßig so ausgebildet, daß sie mehrere Arten von logischen Verknüpfungen wahlweise ausführen kann, z. B. UND, ODER, NICHT usf. Hierzu besteht sie zweckmäßig aus einem Multiplexer, dessen Steuereingang die zu verknüpfenden Signale zugeführt sind und an dessen Dateneingänge eine derartige Signalkombination (Verknüpfungscode) angelegt ist, daß bei den jeweils zugeführten Signalen das entsprechend der gewünschten Verknüpfungsfunktion richtige Ausgangssignal abgegeben wird. Jede Verknüpfungsfunktion erfordert einen eigenen Code. Die Gesamtheit des Verknüpfungscodes ist zweckmäßig in einem Speicher, z. B. dem Arbeitsspeicher des Auswerterechners, abgelegt und kann von dort abgerufen werden. Oft ist es erforderlich, Bilder zu verschieben, um Korrelationen von Objekten festzustellen, Randbereiche zu ermitteln oder Störungen zu unterdrücken. Hierzu ist vorteilhaft eine Verschiebeeinrichtung vorgesehen, mit der die Bilddaten voreilend oder verzögert aus dem Bildspeicher ausgelesen oder in diesen eingetragen werden, und zwar in der Weise, daß dies einer Bildverschiebung entspricht. Durch logische Verknüpfung der Bildsignale von verschobenem und nicht verschobenem Bild können Korrelationen gebildet und unerwünschte Bildteile entfernt werden.

Sollen Bilddaten verknüpft und bearbeitet werden, die Grauwerte darstellen, so ist vorteilhaft die Verknüpfungsschaltung eine Arithmetik-und Logikeinheit, die logische und/oder arithmetische Operationen mit den Bilddaten durchführt.

Zum Vorverarbeiten von Bilddaten, z. B. Aussondern von Störungen, Erkennen von Streifen vorgegebener Breite, von Kanten oder von Bildänderungen und dergleichen können die Bilddaten gefiltert werden, indem sie als Adresse einem Filterspeicher zugeführt sind, in dem für jede Bilddatenkombination und jede gewünschte Filterfunktion ein Ausgangssignal gespeichert ist. Sollen Bilddaten von benachbarten Bildpunkten eines einzigen Bildes gefiltert werden, so werden diese Bilddaten als Adresse dem Filterspeicher zugeführt. Sollen Bilddaten lagegleicher Bildpunkte von zu verschiedenen Zeiten aufgenommenen Bildern gefiltert werden, so werden die Bilder in verschiedenen Bereichen eines Bildspeichers gespeichert, und die zu lagegleichen Bildpunkten gehörenden Bilddaten werden parallel ausgelesen und als Adressen dem Filterspeicher zugeführt.

Anhand der Zeichnungen werden im folgenden ein Ausführungsbeispiel der Erfindung sowie weitere Vorteile und Ausgestaltungen der Erfindung näher beschrieben und erläutert.

In Figur 1 ist das Prinzipschaltbild eines Ausführungsbeispiels dargestellt,

Figur 2 verdeutlicht die Funktion der Verknüpfungslogik des Ausführungsbeispiels,

Figur 3 das Lesen und Laden des Bildspeichers und

in Figur 4 ist die Arbeitsweise des Ausführungsbeispiels bei der Bildreinigung veranschaulicht.

Figur 5 zeigt das Prinzipschaltbild einer Anordnung zum Verarbeiten und Verknüpfen von Grauwerte darstellenden Bilddaten und

Figur 6 das Schaltbild einer Anordnung zum Filtern von Bilddaten neben-oder untereinanderliegender Bildpunkte eines Bildes oder von lagegleichen Bildpunkten mehrerer zu verschiedenen Zeiten aufgenommener Bilder.

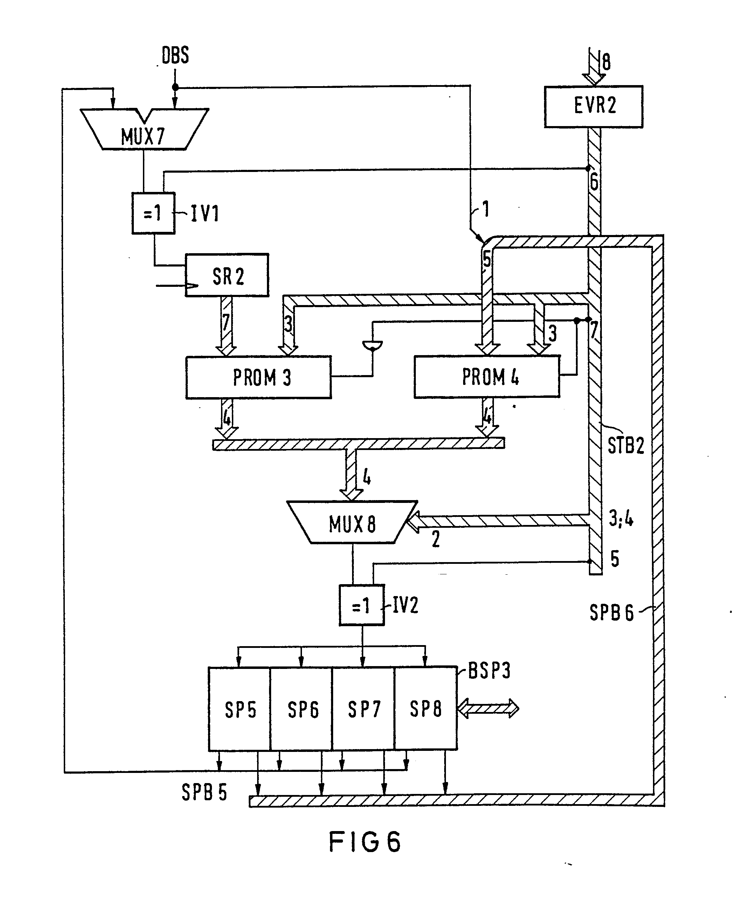

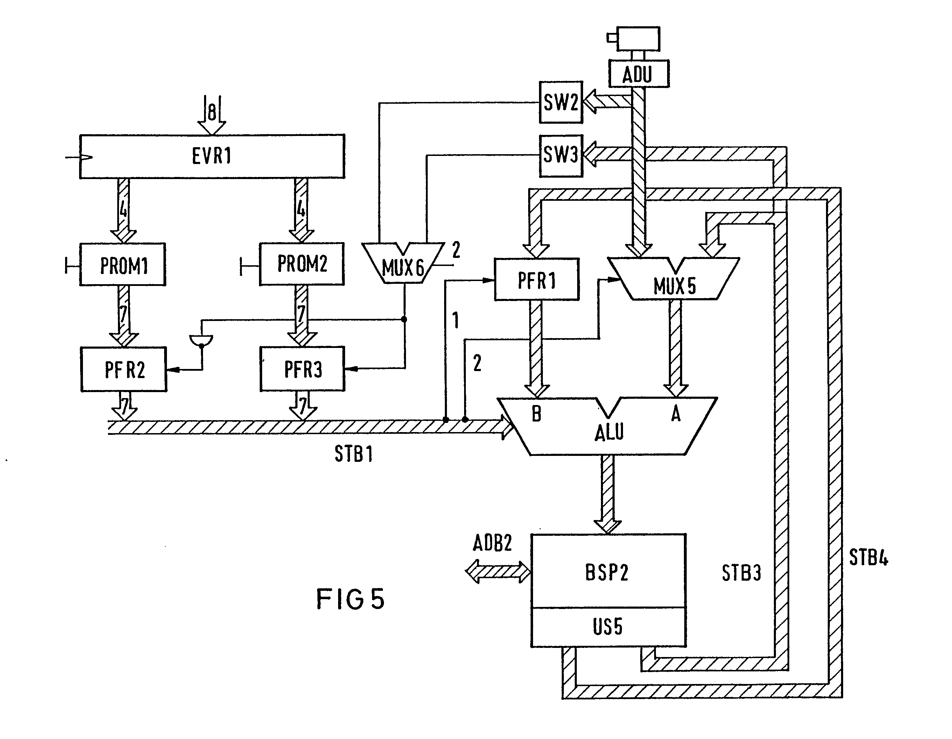

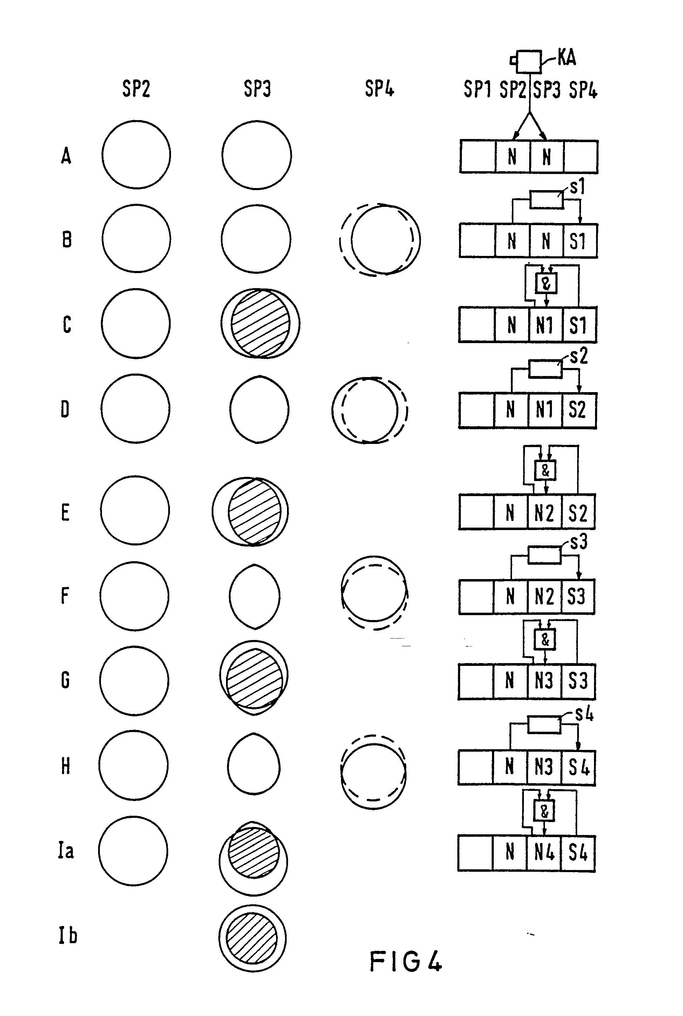

In Figur 1 ist mit BSP1 ein Bildspeicher bezeichnet, der vier Speicher SP1, SP2, SP3, SP4 enthält, in denen Binärsignale für je ein Bild gespeichert werden können. Sie werden durch Zuführen einer Adresse über einen Adressenbus ADB1 parallel adressiert, so daß die einander entsprechenden Zellen von mit zusätzlichen Signalen ausgewählten Speichern gleichzeitig ausgelesen werden. Im Ausführungsbeispiel können maximal zwei Speicher gleichzeitig ausgelesen werden, wobei ihre Ausgangssignale, die jeweils über einen Parallel-Serienwandler PSW1, PSW2, PSW3, PSW4 geführt sind, auf zwei Busleitungen SPB1, SPB2 mittels Umschalter US1, US2, US3, US4 geschaltet werden. An die Busleitungen SPB1, SPB2 sind Eingänge B, C einer Verknüpfungsschaltung VL angeschlossen. Die Signale auf der Busleitung SPB1 können ferner über einen Multiplexer MUX1 und eine weiter unten zu erläuternde Verzögerungsschaltung BVE auch einem Eingang A der Verknüpfungsschaltung VL zugeführt werden. Der zweite Eingang des Multiplexers MUX1 ist einer Schwellwertschaltung SW nachgeschaltet, welche das Videosignal einer Kamera KA in ein binäres Signal umsetzt. Die Verknüpfungsschaltung VL ist so ausgebildet, daß sie die drei ihren Eingängen A, B, C zugeführten binären Signale nach jeder beliebigen logischen Funktion verknüpfen kann. Die jeweilige Verknüpfungsfunktion ist dabei durch einen 8 Bit-Verknüpfungscode gegeben, der in ein Register VLR, Z. B. aus dem Speicher eines übergeordneten Rechners, eingetragen ist. Zweckmäßig besteht die Verknüpfungsschaltung aus einem Multiplexer, z. B. 74 LS 151 von Texas Instruments, dessen Dateneingängen E1, E2 ... E8 der Verknüpfungscode und dessen Steuereingängen A, B, C die zu verknüpfenden Signale zugeführt sind.

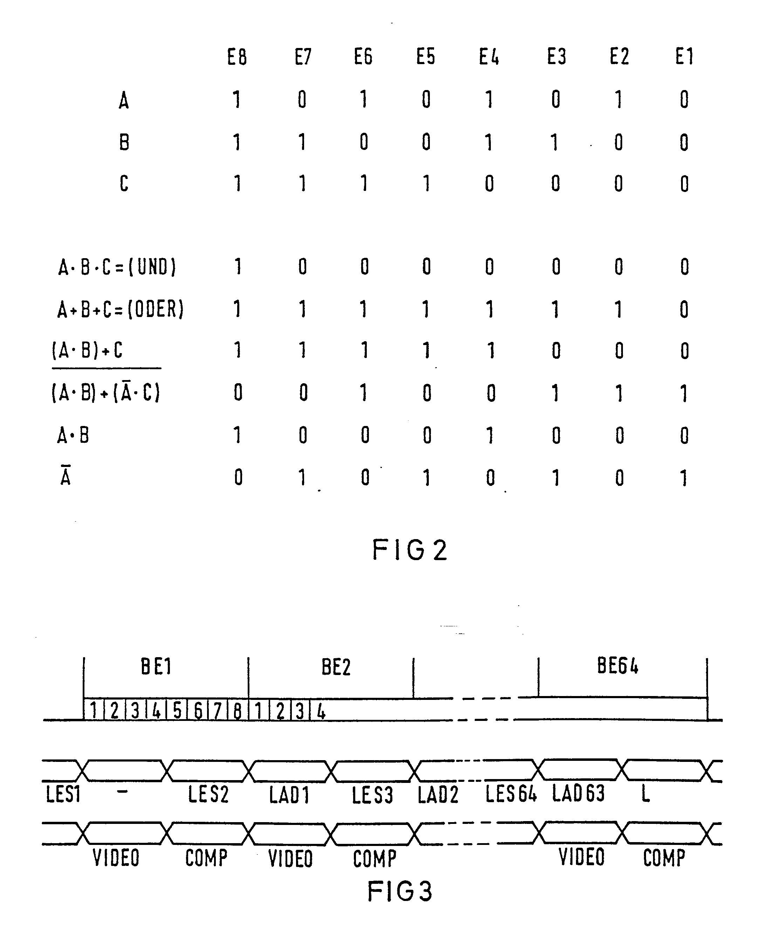

Anhand der Figur 2 wird im folgenden die Arbeitsweise und die Bildung des Verknüpfungscodes näher erläutert. In der obersten Zeile sind die Dateneingänge E1, E2, E3 ... E8 angegeben, denen die Signale aus dem Register VLR zugeführt sind. In der zweiten bis vierten Zeile sind untereinanderstehend alle Signalkombinationen aufgeführt, die den Eingängen A, B, C zugeführt werden können. Jedem Ein gang ist eine Signalkombination zugeordnet, mit der Wirkung, daß bei Anliegen dieser Signalkombination an den Eingängen A, B, C das Signal am zugehörigen Eingang E1, E2 ... zum Ausgang durchgeschaltet wird. Sollen die Signale an den Eingangen A, B, C nach einer UND-Funktion (A.B.C) verknüpft werden, wird den Eingängen E1 ... E8 der Code 1000 0000 zugeführt (Zeile 5). Am Ausgang der Verknüpfungsschaltung VL erscheint dann nur in dem Falle, daß an allen drei Eingängen A, B, C log. "1"-Signal liegt, eine "1". Im Falle der ODER-Funktion (A + B + C) ist die Kombination 1111 1110 (Zeile 6). Für die Invertierung des dem Eingang A zugeführten Signals ist die Kombination 0101 0101 (Zeile 7), und für die UND-Verknüpfung von den Eingängen A und B zugeführten Signale, unabhängig vom Signal am Eingang C, ist die Signalkombination 1000 1000 erforderlich (Zeile 8). Auch komplexe logische Verknüpfungen wie (A.B) + C oder (A.B) + ( $\overline{A}$ .C) sind realisierbar, wie in den beiden letzten Zeilen gezeigt. Insgesamt sind 256, also alle bei drei Eingangsvariablen möglichen Verknüpfungsfunktionen möglich. Sollen nur zwei Eingangssignale verknüpft werden, genügt ein Multiplexer mit vier Dateneingängen. Ist die Zahl der Eingangsvariablen dagegen vier, sind 16 Dateneingänge erforderlich. In jedem Falle erfolgt die Verknüpfung mit der Bildpunktfrequenz von z. B. 12 MHz.

An den Ausgang der Verknüpfungsschaltung VL ist eine weitere Verzögerungsschaltung BVA angeschlossen, die ihrerseits mit den Dateneingängen des Bildspeichers BSP1 verbunden ist. Es ist daher z. B. möglich, Daten aus zwei der Speicher SP1, SP2, SP3, SP4 über die beiden Busleitungen SPB1, SPB2 auszulesen, miteinander und gegebenenfalls mit aus dem aktuellen Videosignal abgeleiteten Bilddaten zu verknüpfen und in einen dritten Speicher oder auch in einen der Speicher, aus denen die Daten ausgelesen wurden, einzutragen. Dies ermöglicht eine schnelle Vorverarbeitung von Bilddaten, die den Auswerterechner entlastet.

Zusätzlich können die Bilddaten mit Hilfe von Verschiebeoperationen vorverarbeitet werden, mit denen das Ein-und/oder Auslesen der gespeicherten und/oder der aktuellen Bilddaten zeitlich so verschoben wird, daß das zugehörige Bild um eine bestimmte Anzahl von Bildpunkten in Zeilenrichtung und/oder senkrecht dazu gegenüber dem ursprünglichen Bild verschoben wird. Im einfachsten Falle kann dies mit einer Modifikation der Lese-und/oder Schreibadressen der Speicher erreicht werden. Hierzu ist erforderlich, daß die Daten der einzelnen Bildpunkte in gesonderten Speicherzellen untergebracht werden und somit einzeln adressierbar sind. Im Ausführungsbeispiel sind zur Verlängerung der erforderlichen Zugriffszeiten die Daten von je acht aufeinanderfolgenden Bildpunkten mittels eines Serien-Parallelwandlers SPW zu einem 8 Bit-Wort zusammengefaßt und in einer Speicherzelle hinter legt. Bei einer Auflösung des Fernsehbildes von 512 Bildpunkten/Zeile und 256 Zeilen hat dann jeder Speicher eine Kapazität von 16 k $^x$ 8 Bit, wobei gemäß Figur 1 vier solcher Speicher vorhanden sind. Zusätzlich können noch mehrere Speicherebenen vorgesehen sein, die durch sogenanntes Paging angewählt werden können.

In Figur 3 ist das Auslesen und Einschreiben von Daten aus bzw. in den Bildspeicher veranschaulicht. Die acht nebeneinanderliegenden Bildpunkte, deren Daten in einer Speicherzelle gespeichert sind, sind zu je einem Bildelement BE1, BE2 ... BE64 zusammengefaßt, so daß eine Zeile bei 512 Bildpunkten 64 Bildelemente enthält. Für die erste Zeile ist dies veranschaulicht. Sollen die Daten aus zwei Speichern miteinander und gegebenenfalls mit aktuellen Bilddaten verknüpft und die verknüpften Daten in einen Speicher wieder eingetragen werden, so sind je Bildelement zwei Speicherzyklen notwendig, und zwar ein Lesezyklus LESi und ein Ladezyklus LADi. Dabei werden die Daten des Bildelementes BE2 während des zweiten Zyklus des Bildelementes BE1 gelesen und die verknüpften Daten während des ersten Zyklus LAD2 des Bildelemen tes BE2 geladen. In der Zwischenzeit werden die verknüpften Daten des Bildelementes BE1 geladen und die Daten des Bildelementes BE3 gelesen (LES3). Es müssen also nacheinander die Speicheradressen 2, 1, 3, 2 ... oder allgemein n, n-1, n+1, n, n+2 ... gebildet werden. Zum Erzeugen dieser Adressenfolge enthält das Ausführungsbeispiel nach Figur 1 zwei Adressenzähler ADZ1, ADZ2, die unabhängig voneinander mit den Inhalten von zwei Adressenregistern ADR1, ADR2 voreingestellt werden können. Liefert der Adressenzähler ADZ1 die Lese-und der Adressenzähler ADZ2 die Ladeadressen, so wird, wenn der Zähler ADZ1 zu Beginn eines Lese-/Ladezyklus auf 1 und der Zähler ADZ2 auf 0 voreingestellt ist, die oben angegebene Adressenfolge erzeugt. Dabei werden die Ausgänge der Zähler ADZ1, ADZ2 von einem Multiplexer MUX3 abwechselnd über den Adressenbus ADB1 auf den Bildspeicher BSP1 geschaltet und ihr Stand nach jedem Lese-bzw. Ladevorgang um eins erhöht. Der Multiplexer MUX3 wird ebenso wie die anderen Einheiten der Anordnung nach Figur 1 von einem übergeordneten Rechner, welcher der Auswerterechner sein kann, gesteuert.

In ein Register BAR1 kann die Nummer der Speicherebene eingetragen werden, zu welcher zugegriffen werden soll. Mit dem Inhalt eines Registers BAR2 können für den Videozugriff zum Bildspeicher für das Lesen und Laden getrennt verschiedene Ebenen ausgewählt werden. Über einen Schalter SC können Basisadressen, mit denen die physikalischen Adressen des Bildspeichers erzeugt werden, auf den Adressenbus ADB1 geschaltet werden. Die Multiplexer MUX3, MUX4 sowie der Schalter SC werden zweckmäßig mittels eines im Auswerterechner ablaufenden Mikroprogramms gesteuert.

Die wahlfreie Voreinstellung der Adressenzähler ADZ1, ADZ2 gestattet, das Auslesen und Einschreiben der Bilddaten im Vergleich zu den aktuellen Bildsignalen derselben Bildpunkte zu verschieben. Zur vertikalen Verschiebung wird der Zählerstand je Zeile um 64 erhöht bzw. erniedrigt, da die Zeilen jeweils 64 Bildelemente enthalten und je Bildelement ein Speicherplatz vorgesehen ist, wobei die Speicherplätze aufeinanderfolgen. Die Verschiebung in Zeilenrichtung könnte mit einer einfachen Adressenmodifikation nur in Sprüngen von acht Bildpunkten erfolgen. Die bildpunktweise Verschiebung erfolgt in den Verzögerungsschaltungen BVE, BVA, denen von den Registern ADR1, ADR2 je drei Bit, entsprechend einer Bildverschiebung von null bis sieben Bildpunkten zugeführt sind. Die beiden Verzögerungsschaltungen sind in gleicher Weise aufgebaut. Sie bestehen jeweils aus einem Schieberegister SR1, dessen Eingang die Bilddaten und ein Schiebetakt mit der Bildpunktfrequenz zugeführt sind. Das Eingangssignal und die Ausgänge der sieben ersten Stufen liegen an den Eingängen eines Multiplexers MUX2, der mit den drei Bit des Registers ADR1 bzw. ADR2 gesteuert ist. Ein weiteres Bit wird zur Adressenmodifikation der Adressenzähler ADZ1, ADZ2 zur zusätzlichen Bildverschiebung in Zeilenrichtung um ein Bildelement zugeführt. Es ist somit insgesamt eine Verschiebung von -7 bis +8 Bildpunkten bzw. von 0 bis 15 Bildpunkten möglich.

Im Ausführungsbeispiel sind zwei Verschiebeschaltungen vorgesehen. Prinzipiell genügt jedoch nur eine einzige. Während bei gespeicherten Bilddaten positive und negative Verschiebungen möglich sind, können aktuelle Bilddaten nur verzögert werden, d. h. mit positiver Verschiebung verknüpft und in den Speicher eingetragen werden.

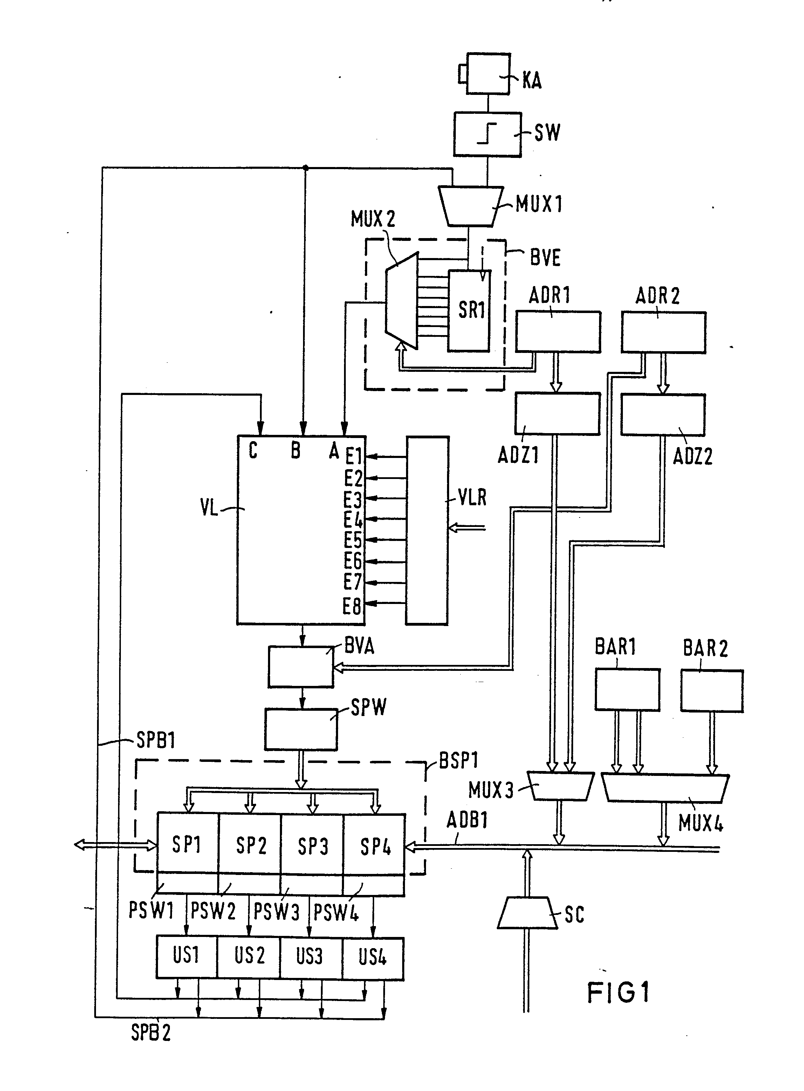

Die Kombination von Verknüpfen und Verschieben kann zum Bildreinigen, das ist das Unterdrücken von störenden Bildstrukturen, die aufgrund von Signalrauschen oder anderen Störeffekten entstehen, eingesetzt werden, wie in Figur 4 dargestellt ist. Die Inhalte der Speicher SP2, SP3, SP4 sind in den drei linken Spalten veranschaulicht, auf der rechten Seite ist die Verarbeitung der Speicherinhalte verdeutlicht. Die ursprünglichen Bilddaten N werden parallel in die beiden Speicher SP2, SP3 eingetragen (Zeile A). Der Inhalt des Speichers SP2 wird einer Ver schiebeoperation sl in positiver X-Richtung unterworfen, wobei die Verschiebung vier Bildpunkte betragen soll. Die Bilddaten S1 des so verschobenen Bildes werden in den Speicher SP4 eingetragen (Zeile B). Im Schritt C werden sie nach einer UND-Funktion mit dem Inhalt des Speichers SP3 logisch verknüpft und das Ergebnis N1, das als schraffierte Fläche veranschaulicht ist, in den Speicher SP3 eingeschrieben. Im Schritt D wird der Inhalt des Speichers SP2 einer Verschiebeoperation s2 unterworfen, entsprechend einer Bildverschiebung um vier Bildpunkte nach links und das Ergebnis S2 in den Speicher SP4 eingelesen. Das Ergebnis der im Schritt E durchgeführten UND-Verknüpfung, das in den Speicher SP3 eingeschrieben wird, ist wieder als schraffierte Fläche veranschaulicht. In den Schritten F und H wird in Verschiebeoperationen s3, s4 eine Verschiebung um vier Bildpunkte nach oben bzw. nach unten vorgenommen und in den darauffolgenden Schritten G und I wieder die UND-Verknüpfung durchgeführt. Das Ergebnis ist in Zeile Ib veranschaulicht; vom ursprünglichen Objektbild ist der Rand nahezu gleichförmig abgetragen. Es ist ersichtlich, daß Objekte bzw. Störflecken, deren Abmessungen bei einer Verschiebung um jeweils vier Bildpunkte acht Bildpunkte oder kleiner sind, verschwinden. Die Verschieberichtung wird man der Struktur der zu beseitigenden störenden Bildstrukturen anpassen. Zum Unterdrücken von kreisförmigen oder unbekannten Strukturen wird man das oben geschilderte Verfahren einsetzen, das um vier weitere Verschiebungen (± 45° und ± 135° zur Zeilenrichtung) und anschließende UND-Verknüpfungen ergänzt und damit verbessert werden kann. Zum Unterdrücken von parallelen Streifen, die in beliebiger Richtung verlaufen können, genügt eine Verschiebung senkrecht zu diesen Streifen, wobei selbstverständlich die Verschiebung mindestens gleich der Streifenbreite sein muß.

Für die weitere Bildauswertung müssen im allgemeinen die Bilddaten wieder so modifiziert werden, daß die gespeicherten Bilder der auszuwertenden Objekte wieder auf ihre ursprüngliche Größe gebracht werden. Dies geschieht ebenfalls durch Verschieben und anschließendes logisches Verknüpfen, wobei aber die Verknüpfung eine ODER-Funktion ist.

Verschiebeoperationen und Verknüpfungen können auch mit den Bilddaten von Graubildern durchgeführt werden, bei denen je Bildpunkt mehrere den Grauwert beschreibende Bit gespeichert sind. Die Verknüpfungslogik besteht dann in einer Arithmetik-und Logikeinheit (ALU), die zusätzlich oder anstelle von logischen Operationen arithmetische Operationen ausführt.

Figur 5 zeigt das Prinzipschaltbild einer Schaltungsanordnung, mit der die Bilddaten auch arithmetischen Operationen unterworfen werden können, und zwar können die Operationen innerhalb und außerhalb einer Maske, die innerhalb des Meßfeldes liegt, unterschiedlich sein. Die Anordnung nach Figur 5 enthält einen Bildspeicher BSP2, in dem mindestens zwei digitalisierte Graubilder gespeichert werden können. Digitalisiertes Graubild bedeutet, daß der Grauwert eines jeden Bildelementes als Digitalwert von z. B. 6 Bit, entsprechend 64 Graustufen, dargestellt wird.

Diese Grauwerte werden zunächst in einem Analog-Digital-Umsetzer ADU erzeugt, der an eine nicht bezeichnete Kamera angeschlossen ist. Die digitalisierten Grauwerte werden dem einen Eingang eines Multiplexers MUX5 zugeführt, dessen Ausgang mit dem einen Eingang A einer Arithmetik-und Logikeinheit ALU verbunden ist. An deren Ausgang ist der Bildspeicher BSP2 angeschlossen. Im einfachsten Falle können daher die vom Analog-Digital-Umsetzer ADU digitalisierten Grauwerte unverändert in den Bildspeicher BSP2 eingetragen werden.

Wie. schon erwähnt, enthält der Bildspeicher mehrere Bereiche, in denen je ein vollständiges Bild gespeichert werden kann. Die aus den einzelnen Bereichen ausgelesenen Bilddaten können mittels eines Umschalters US5 wahlweise auf zwei Speicherleitungen SPB3, SPB4 geschaltet werden. Die Speicherleitung SPB3 führt auf den zweiten Eingang des Multiplexers MUX5, die Leitung SPB4 zu einem Pufferregister PFR1, dessen Ausgang mit einem zweiten Eingang B der Arithmetik-und Logikeinheit ALU verbunden ist. Der Multiplexer MUX5 kann über einen Steuerbus STB1 so gesteuert werden, daß er entweder die Bilddaten von der Speicherleitung SPB3 oder aktuelle Bilddaten vom Analog-Digital-Umsetzer ADU zum Eingang A der Arithmetik-und Logikeinheit ALU durchschaltet oder daß er seine Eingangssignale sperrt. Das Pufferregister PFR1 kann ebenfalls über den Steuerbus STB1 freigegeben oder gesperrt werden. Auch der Steuereingang der Arithmetik-und Logikeinheit ALU liegt am Steuerbus STB1. Sie kann daher eine Vielzahl von Operationen ausführen an Daten von zwei gespeicherten Bildern, die über die Leitungen SPB3, SPB4 übertragen werden oder von einem aktuellen und einem gespeicherten Bild oder nur an aktuellen Bilddaten oder gespeicherten Bilddaten, die über die Leitung SPB3 oder die Leitung SPB4 übertragen werden. Die Operationsergebnisse werden als neue Bilddaten in den Speicher BSP2 eingetragen. Die Abtastung von Bildern in der Kamera und das Auslesen des Bildspeichers BSP2 ist im allgemeinen so synchronisiert, daß die Bilddaten gleichlagiger Bildpunkte gleichzeitig oder mit einer definierten gewünschten zeitlichen Verschiebung der Einheit ALU zugeführt werden. Die im Speicher enthaltenen Bilddaten können über eine Leitung ADB2 zu einem Auswerterechner übertragen werden.

Ein die Operation der Einheit ALU bestimmendes Steuerwort wird in ein Steuerregister EVR1 eingetragen. Das Steuerwort von 8 Bit wird unterteilt zwei Festwertspeichern PROM1, PROM2 zugeführt, deren Ausgangssignale Operationscodes für die Einheit ALU sind. Der Operationscode aus dem Speicher PROM1 soll für den Bereich außerhalb der Maske, der Operationscode aus dem Speicher PROM2 für den innerhalb der Maske liegenden Bereich gelten. Sie werden in zwei Pufferregistern PFR2, PFR3 zwischengespeichert. Ihre Ausgabe aus diesen Registern auf den Steuerbus STB1 wird von Maskensignalen gesteuert, die ein Multiplexer MUX6 abgibt. Dieser schaltet entweder das Signal einer Schwellwertstufe SW2, die an den Analog-Digital-Umsetzer ADU angeschlossen ist, oder einer Schwellwertstufe SW3, die Bilddaten über die Speichererleitung SPB3 erhält, durch, oder er sperrt die Signale an beiden Eingängen, so daß dann stets der Inhalt des Pufferregisters PFR2 auf den Steuerbus STB1 geschaltet ist. In den beiden anderen Fällen ist die Ausgabe der Pufferregister PFR2, PFR3 entweder vom Inhalt des aktuellen Bildes oder des gespeicherten Bildes gesteuert. Die Operationscodes steuern nicht nur die Einheit ALU, sondern auch das Pufferregister PFR1 und den Multiplexer MUX5.

Eine häufig erforderliche Vorverarbeitung von Bilddaten ist die Filterung. Hierunter wird z. B. verstanden, daß Bilddaten für einzelne Bildelemente in Abhängigkeit der Bilddaten benachbarter Bildelemente oder von lagegleichen Bildpunkten zeitlich aufeinanderfolgender Bilder erzeugt werden. In Figur 6 ist das Prinzipschaltbild einer Anordnung dargestellt, mit der Bilddaten von neben- oder untereinanderliegenden Bildpunkten oder von Bilddaten lagegleicher Bildpunkte von mehreren aufeinanderfolgenden Bildern geeignet ist. Ein Bildspeicher BSP3 besteht aus vier Speicherbereichen SP5, SP6, SP7, SP8, in denen je ein binäres Bild speicherbar ist. Zum Filtern von Bilddaten nebeneinander-oder untereinanderliegender Bildpunkte eines bildes wird der zugehörige Speicherinhalt über eine Speicherleitung SPB5 einem Multiplexer MUX7 zugeführt, an dessen Ausgang ein ein-und ausschaltbarer Inverter IV1 angeschlossen ist. Einem zweiten Eingang des Multiplexer MUX7 sind über eine Leitung DBS die Binärsignale eines aktuell erzeugten Bildes zugeführt, so daß, wenn der Multiplexer MUX7 diese auf den Inverter IV1 durchschaltet, die Bilddaten von nebeneinanderliegenden Bildpunkten eines aktuell erzeugten Bildes gefiltert werden können. Die Ausgangssignale des Inverters IV1 werden mit der Bildpunktfrequenz bzw. mit dem Auslesetakt des Bildspeichers BSP3 in ein als Serien-Parallelwandler dienendes Schieberegister SR2 geschoben. An dieses ist ein erster Filterspeicher PROM3 angeschlossen, in dem die gewünschten Filterfunktionen für sämtliche vom Schieberegister SR2 gelieferten Signalkombinationen enthalten sind. Die jeweils ausgewählte Filterfunktion ist als Steuerwort in einem Steuerregister EVR2 enthalten, das von einem Auswerterechner geladen wird. Ein Teil des Steuerwortes wird dem Filterspeicher PROM3 als Basisadresse zugeführt, die mit den vom Schieberegister SR2 ausgegebenen Datem zu den vollständigen Speicheradressen ergänzt wird. Mit einem weiteren Bit des Steuerwortes wird der Speicher PROM3 freigegeben. Mit demselben Bit wird ein zweiter Filterspeicher PROM4 gesperrt, der zum Filtern von Bilddaten zeitlich aufeinanderfolgender Bilder dient. Aus der so adressierten Speicherzelle wird eine noch mehrere Filterfunktionen enthaltende Signalkombination an einen Multiplexer MUX8 ausgelesen, der von weiteren Stellen des Steuerwortes des Registers EVR2 derart gesteuert ist, daß nur das Signal der gewünschten Filterfunktion durchgeschaltet wird. Dieses gelangt über einen weiteren ein-und ausschaltbaren Inverter IV2 zum Bildspeicher BSP3 und kann dort in einen der Bereiche SP5 ... SP8 eingetragen werden.

Zum Filtern der Bilddaten von lagegleichen Bildpunkten von zu verschiedenen Zeiten aufgenommenen Bildern werden diese in den Speicherbereichen SP5 ... SP8 gespeichert, der Filterspeicher PROM3 wird gesperrt und der Speicher PROM4 freigegeben. Dieser enthält alle gewünschten Filterfunktionen, von denen je eine Gruppe in einem Speicherbereich enthalten ist. Als Basisadresse für diese Speicherbereiche dient ein Teil des Steuerwortes. Die Basisadresse wird vervollständigt durch die aus den Bildspeicherbereichen SP5 ... SP8 parallel ausgelesenen Bilddaten und und dem aktuellen Bilddatum auf der Leitung DBS. Der Inhalt der so adressierten Speicherzelle gelangt an den Eingang des Multiplexers MUX8, der von einem weiteren Teil des im Register EVR2 enthaltenen Steuerwortes so geschaltet ist, daß das Bit der gewünschten Filterfunktion zum Inverter IV2 durchgeschaltet wird.

## Ansprüche

1. Schaltungsanordnung zum Verarbeiten von Bilddaten mit einem Bildspeicher, der mit den Bilddaten geladen wird, und mit einem Auswerterechner, dem die Bilddaten zugeführt, sind, **dadurch gekennzeichnet**, daß der Bildspeicher (BSP1) mehrere Speicher (SP1, SP2, SP3, SP4) enthält, in denen die Bilddaten je eines bildes speicherbar sind und an dessen Ausgänge eine logische Verknüpfungsschaltung (VL) anschließbar ist, deren Ausgangssignale dem Bildspeicher zugeführt sind.

2. Schaltungsanordnung nach Anspruch 1, **dadurch gekennzeichnet**, daß einem weiteren Eingang der Verknüpfungsschaltung (VL) aktuelle Bilddaten zuführbar sind.

3. Schaltungsanordnung nach Anspruch 1 oder 2, **dadurch gekennzeichnet**, daß die Verknüpfungsschaltung (VL) einen Multiplexer enthält, dessen Steuereingängen (A, B, C) die zu verknüpfenden Signale und dessen Dateneingängen (E1, E2 ... E8) ein die jeweilige Verknüpfungsfunktion bewirkender Verknüpfungscode zugeführt ist.

4. Schaltungsanordnung nach einem der Ansprüche 1 bis 3, **dadurch gekennzeichnet**, daß die Adressierung des Bildspeichers (BSP1) beim Laden und/oder beim Lesen der gespeicherten Bilddaten im Sinne einer Bildverschiebung veränderbar ist.

5. Schaltungsanordnung nach Anspruch 4, **dadurch gekennzeichnet**, daß jeweils die Bilddaten von mehreren in Bildzeilenrichtung nebeneinanderliegenden Bildpunkten in eine Speicherzelle nach Serien-Parallel-umsetzung gespeichert sind und daß zur bildpunktweisen Verschiebung in Zeilenrichtung eine Verzögerungsschaltung zwischen einem an den Ausgang des Bildspeichers (BSP1) an geschlossenen Parall-Serienumsetzers (PSW1, PSW2, PSW4) und die Verknüpfungsschaltung - (VL) und/oder zwischen den Ausgang der Verknüpfungsschaltung (VL) und den Bildspeicher - (BSP1) vorgeschalteten Serien-Parallelwandler - (SPW) geschaltet ist, wobei die Verzögerungszeit ein ganzzahliges Vielfaches der Bildpunktperiode beträgt.

6. Anwendung einer Schaltungsanordnung nach einem der Ansprüche 1 bis 3 und 4 oder 5 zur Bildreinigung von Störelementen, deren Abmessung zumindest in einer Richtung kleiner als die der auszuwertenden Bildteile sind, **dadurch gekennzeichnet**, daß die Bilddaten in einer ersten Phase entsprechend einer Bildverschiebung veränderte Bilddaten mit unveränderten Bilddaten logisch verknüpft werden und daß die in der ersten Phase modifizierten Bilddaten in einer zweiten Phase so verschoben und logisch verknüpft werden, daß die durch die erste Phase erfolgte Modifikation kompensiert wird.

7. Schaltungsanordnung nach Anspruch 1 oder 2, **dadurch gekennzeichnet** , daß die Verknüpfungsschaltung eine Arithmetik-und Logikeinheit (ALU) ist, die Bilddaten verknüpft, die jeweils den Grauwert eines Bildpunktes darstellen.

8. Schaltungsanordnung nach Anspruch 7, **dadurch gekennzeichnet**, daß mindestens einem Eingang der Arithmetik-und Logikeinheit (ALU) ein Multiplexer (MUX5) vorgeschaltet ist, über den wahlweise Bilddaten aus einer von zwei Bilddatenquellen (BSP2, ADU) der Arithmetik-und Logikeinheit (ALU) zuführbar sind.

9. Schaltungsanordnung nach Anspruch 7 oder 8, **dadurch gekennzeichnet** , daß unterschiedliche, der logischen Verknüpfung der Bilddaten entsprechende Steuersignale für die Arithmetik- und Logikeinheit (ALU) über je eines von mehreren Pufferregistern (PFR2, PFR3) geführt sind, die in Abhängigkeit von Maskensignalen freigegeben sind.

10. Schaltungsanordnung nach Anspruch 1 oder 2, **dadurch gekennzeichnet** , daß zum Filtern von Bilddaten diese als Adresse einem Filterspeicher (PROM3, PROM4) zugeführt sind, in dem für jede Bilddatenkombination und jede gewünschte Filterfunktion ein Ausgangssignal gespeichert ist.

FIG 6

FIG 5

0 207 435

FIG 4

|                    | E8 | E7 | E6 | E5 | E4 | E3 | E2 | E1 |
|--------------------|----|----|----|----|----|----|----|----|
| A                  | 1  | 0  | 1  | 0  | 1  | 0  | 1  | 0  |
| B                  | 1  | 1  | 0  | 0  | 1  | 1  | 0  | 0  |
| C                  | 1  | 1  | 1  | 1  | 0  | 0  | 0  | 0  |
| $A \cdot B \cdot C = (UND)$ | 1  | 0  | 0  | 0  | 0  | 0  | 0  | 0  |
| $A + B + C = (ODER)$ | 1  | 1  | 1  | 1  | 1  | 1  | 1  | 0  |
| $(A \cdot B) + C$  | 1  | 1  | 1  | 1  | 1  | 0  | 0  | 0  |
| $\overline{(A \cdot B) + (\bar{A} \cdot C)}$ | 0  | 0  | 1  | 0  | 0  | 1  | 1  | 1  |
| $A \cdot B$        | 1  | 0  | 0  | 0  | 1  | 0  | 0  | 0  |
| $\bar{A}$          | 0  | 1  | 0  | 1  | 0  | 1  | 0  | 1  |

FIG 2

FIG 3

0 207 435

FIG1